(19) Europäisches Patentamt
European Patent Office
Office européen des brevets

(11) **EP 3 870 869 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **19794499.4**

(22) Anmeldetag: **23.10.2019**

(51) Internationale Patentklassifikation (IPC):
*F16C 19/18* (2006.01)    *F16C 33/34* (2006.01)
*F03D 80/70* (2016.01)    *F16C 19/38* (2006.01)
*F16C 33/60* (2006.01)    *F16C 33/36* (2006.01)

(52) Gemeinsame Patentklassifikation (CPC):
**F03D 80/70; F16C 19/381; F16C 33/34;**
**F16C 33/60;** F05B 2240/50; F16C 33/366;
F16C 2240/50; F16C 2300/14; F16C 2360/31;
Y02E 10/72

(86) Internationale Anmeldenummer:
**PCT/EP2019/078888**

(87) Internationale Veröffentlichungsnummer:
**WO 2020/083990 (30.04.2020 Gazette 2020/18)**

(54) **WÄLZLAGERANORDNUNG UND WINDKRAFTANLAGE**

ROLLING BEARING ARRANGEMENT AND WIND TURBINE

ENSEMBLE DE PALIERS À ROULEMENT ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2018 DE 102018218275**

(43) Veröffentlichungstag der Anmeldung:
**01.09.2021 Patentblatt 2021/35**

(73) Patentinhaber:
• **thyssenkrupp rothe erde Germany GmbH**
  **44137 Dortmund (DE)**
• **thyssenkrupp AG**
  **45143 Essen (DE)**

(72) Erfinder: **BUSEMANN, Nico**
**59065 Hamm (DE)**

(74) Vertreter: **thyssenkrupp Intellectual Property GmbH**
**ThyssenKrupp Allee 1**
**45143 Essen (DE)**

(56) Entgegenhaltungen:
DE-A1-102006 054 453    DE-A1-102010 052 117
DE-A1-102011 113 122    DE-A1-102015 102 867
DE-A1-102017 106 962    DE-U1-202013 009 246

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

## Stand der Technik

Die vorliegende Erfindung geht aus von einer Wälzlageranordnung, insbesondere für eine Windkraftanlage, aufweisend einen Außenring und einen zumindest teilweise innerhalb des Außenrings gelagerten Innenring, wobei der Außenring und der Innenring um eine Drehachse relativ zueinander drehbar sind, wobei zwischen dem Außenring und dem Innenring ein erstes Rollenlager mit ersten Wälzkörpern, ein zweites Rollenlager mit zweiten Wälzkörpern und ein drittes Rollenlager mit dritten Wälzkörpern angeordnet ist, wobei das erste Rollenlager und das zweite Rollenlager als Axiallager ausgebildet sind und das dritte Rollenlager als Radiallager ausgebildet ist.

Weiterhin geht die vorliegende Erfindung aus von einer Wälzlageranordnung, insbesondere für eine Windkraftanlage, aufweisend einen Außenring und einen zumindest teilweise innerhalb des Außenrings gelagerten Innenring, wobei der Außenring und der Innenring um eine Drehachse relativ zueinander drehbar sind, wobei zwischen dem Außenring und dem Innenring ein erstes Rollenlager mit ersten Wälzkörpern, ein zweites Rollenlager mit zweiten Wälzkörpern, ein drittes Rollenlager mit dritten Wälzkörpern angeordnet ist und ein viertes Rollenlager mit vierten Wälzkörpern angeordnet ist, wobei das erste Rollenlager und das zweite Rollenlager als Axiallager ausgebildet sind und das dritte Rollenlager und das vierte Rollenlager als Radiallager ausgebildet sind

Solche Wälzlageranordnungen, insbesondere in der Form von dreireihigen Rollendrehverbindungen, sind aus dem Stand der Technik hinlänglich bekannt. Die Ausbildung und Formgebung der Wälzkörper erfolgt typischerweise entsprechend der deutschen DIN-Norm 26281. In der DIN-Norm 26281 von November 2010 wird in Abschnitt 6 "Referenzgeometrie" die Ausbildung des Rollenprofils der Wälzkörper eines Rollenlagers durch eine Profilfunktion beschrieben.

Derartige Wälzlageranordnungen werden beispielsweise in Form von sogenannten Großwälzlagern zur Lagerung der Rotorwelle einer Windkraftanlage verwendet. Windkraftanlagen weisen üblicherweise einen Turm und eine auf dem Turm drehbar angeordnete und als Maschinenträger fungierende Gondel auf. Die in der Gondel angeordnete Rotorwelle ist an einem Ende mit einer Rotornabe verbunden, welche die vom Wind angetriebenen Rotorblätter trägt, während das andere Ende über ein etwaiges Getriebe direkt oder indirekt mit einem Generator zur Stromerzeugung gekoppelt ist. Solche Großwälzlager unterliegen beim Betrieb der Windkraftanlage besonderen Belastungsbedingungen. Bei der Übertragung der Windkraft auf die Rotorblätter und auf die Rotorwelle kommt es zu großen Kräften und Momenten, die hohe mechanische Anforderungen an die Lagerelemente stellen. Andererseits müssen die Lager auch unter diesen Bedingungen über lange Laufzeiten hinweg einen zuverlässigen Betrieb gewährleisten und eine entsprechend hohe Lebensdauer aufweisen.

Zur Quantifizierung der Belastung, die ein Wälzlager aufnehmen kann, bevor es zu funktionsbeeinträchtigenden Schäden kommt, sind in erster Linie zwei Kenngrößen wichtig (vgl. DIN-Norm 26281). Die statische Tragzahl gibt an, welche statische Belastung zum Beispiel ein ruhendes Wälzlagers aufnehmen kann, bevor es Verformungen erleidet, durch die die Funktion oder die Genauigkeit des Wälzlagers beeinträchtigt werden. Die dynamische Tragzahl gibt im Falle von Wälzlagern die Belastung an, die nach einer Million Umdrehungen zu einer Ausfallrate von 10 Prozent führt. Die Lebensdauer eines Wälzlagers lässt sich über empirische Formeln aus der statischen, beziehungsweise dynamischen Tragzahl und der im gegebenen Anwendungsfall vorherrschenden Belastung berechnen. Diese Formeln sind ebenfalls Inhalt der oben genannten deutschen DIN-Norm 26281 und ermöglichen es dem Fachmann, die Dimensionierung der Wälzlager auf die in der jeweiligen Anwendungssituation gegebene Belastungssituation auszurichten.

Insbesondere lässt sich so die Balligkeit der Wälzkörper gemäß der zu erwartenden Belastungen gestalten. Eine präzise Beschreibung des Wälzkörperprofils ist dabei über die oben genannte Profilfunktion möglich, wobei sich eine stärkere oder geringere Balligkeit durch eine entsprechende Wahl der, in der Profilfunktion enthaltenen Formparameter erzielen lässt.

Für die Wahl einer geeigneten Balligkeit sind dabei zwei Überlegungen maßgeblich. Zum einen lässt sich über eine stark konvexe Wälzkörperform eine höhere Widerstandsfähigkeit gegenüber Extremlasten erreichen. Unter einer hohen Belastung kommt es zu einer starken Einfederung zwischen dem balligen Wälzkörper und der Laufbahn, wodurch sich die Kontaktfläche vergrößert und so die Belastung räumlich verteilt, so dass auf diese Weise über die Deformation die hohe Last abgefangen wird. Auf der anderen Seite ergeben sich bei einer starken Konvexität der Wälzkörperform im Normalbetrieb, d.h. bei geringen oder mittleren Lasten, nur entsprechend kleine Kontaktregionen, wodurch es zu stärkerem Verschleiß kommt. Daher ist im Normalbetrieb eine geringere Balligkeit vorteilhaft. So findet die Wahl der passenden Balligkeit also zwischen diesen beiden entgegengesetzten Polen statt, Widerstandsfähigkeit gegenüber starken Lasten auf der einen Seite und Widerstandsfähigkeit gegenüber Verschleiß auf der anderen Seite.

Drei- und vierrreihige Rollendrehverbindungen sind in der Lage, sowohl die axialen, als auch die radialen Kräfte aufzunehmen. Durch die bei einer Windkraftanlage auf das Rotorlager einwirkende asymmetrische Lastverteilung (Windkraft einerseits und Kippkräfte andererseits), werden die beiden axialen Rollenlager nachteiligerweise ungleichmäßig belastet und nutzen sich daher auch ungleich ab. Ferner orientiert man sich bei der Dimensionierung der Rollenlager stets an den höchsten zu erwartenden Kräften, so dass eines der beiden Lager in unnötiger Weise zu stark dimensioniert wird. Eine ensprechende Situation besteht bei den vierreihigen Rollendrehverbindungen sowohl im Bezug auf die beiden Axiallager, als auch auf die beiden Radiallager.

Bei dreireihigen und vierreihigen Rollendrehverbindungen mit dem gleichen logarithmischen Rollenprofil in allen Laufbahnen ist eine der beiden axialen Laufbahnen kritisch für die maximale Pressung unter Extremlast aber in der Lebensdauerberechnung überdimensioniert. Die zweite Laufbahn erreicht unter Extrembelastung niedrigere Pressungen, ist allerdings in der Lebensdauer am Limit. Welche der beiden axialen Laufbahnen (beim Rotorlager nabenseitig oder generatorseitig, beim Blattlager blattseitig oder nabenseitig) kritisch in Bezug auf die Lebensdauer und welche krtisch unter der Extrembelastung ist, kann von Windenergieanlage zu Windenergieanlage variieren. Durch die Nutzung des gleichen logarithmischen Profils, muss je nach späterer Anwendung eine oder beide axiale Laufbahnen im Durchmesser und/oder der Länge ertüchtigt werden, was zu einer Vergrößerung des kompletten Wälzlagers und dadurch zu einer Kostensteigerung führt. Das Gleiche gilt für die dreireihige Rollendrehverbindung in der radialen Laufbahn bzw. in der vierreihigen Rollendrehverbindung in den beiden radialen Laufbahnen. Je nach Konzept der Windenergieanlage und dem elastischen Verhalten der angrenzenden Komponenten muss die radiale Laufbahn der dreireihigen Rollendrehverbindungen bzw. die radialen Laufbahnen der vierreihigen Rollendrehverbindungen im Durchmesser und/oder der Länge ertüchtigt werden, was ebenfalls zu einer Vergrößerung des kompletten Wälzlagers und dadurch zu einer Kostensteigerung führt. Dieses Problem findet primär im Hauptlager bzw. Rotorlager statt, aber natürlich auch im Anwendungsbeispiel eines Rollenlagers als Blattlager oder als Azimutlager.

Die deutsche Patentanmeldung DE 10 2015 102867 A1 beschreibt ein Wälzlager, welches einen äußeren Lagerring, einen konzentrisch innerhalb des äußeren Lagerrings angeordneten inneren Lagerring und eine Mehrzahl von zwischen dem äußeren und dem inneren Lagerring angeordneten Wälzkörpern aufweist, wobei das Wälzlager ferner einen dichtend zwischen dem äußeren Lagerring und dem inneren Lagerring angeordneten Dichtring aufweist, und wobei das Wälzlager einen Zusatzring mit wenigstens einem Abstreifelement aufweist.

Die deutsche Patentanmeldung DE 10 2017 106962 A1 beschreibt eine Wälzlageranordnung für eine Windkraftanlage aufweisend einen Außenring und einen zumindest teilweise innerhalb des Außenrings gelagerten Innenring vorgeschlagen, wobei der Außenring und der Innenring um eine Drehachse relativ zueinander drehbar sind, wobei zwischen dem Außenring und dem Innenring ein erstes Kegelrollenlager mit ersten Kegelrollen und ein zweites Kegelrollenlager mit zweiten Kegelrollen angeordnet ist. Es ist vorgesehen, dass im unbelasteten Zustand der Wälzlageranordnung die ersten Kegelrollen ein erstes logarithmisches Rollenprofil und die zweiten Kegelrollen ein von dem ersten logarithmischen Rollenprofil abweichendes zweites logarithmisches Rollenprofil aufweisen.

## Offenbarung der Erfindung

Es ist also eine Aufgabe der vorliegenden Erfindung eine Wälzlageranordnung und eine Windkraftanlage mit einer Wälzlageranordnung bereitzustellen, bei welcher eine individuelle Anpassung und Optimierung der verschiedenen Teillager einer Rollendrehverbindung an die zu erwartenden Anforderungen erlaubt.

Gelöst wird diese Aufgabe mit einer Wälzlageranordnung, insbesondere für eine Windkraftanlage, aufweisend einen Außenring und einen zumindest teilweise innerhalb des Außenrings gelagerten Innenring, wobei der Außenring und der Innenring um eine Drehachse relativ zueinander drehbar sind, wobei zwischen dem Außenring und dem Innenring ein erstes Rollenlager mit ersten Wälzkörpern, ein zweites Rollenlager mit zweiten Wälzkörpern und ein drittes Rollenlager mit dritten Wälzkörpern angeordnet ist, wobei das erste Rollenlager und das zweite Rollenlager als Axiallager ausgebildet sind und das dritte Rollenlager als Radiallager ausgebildet ist, dadurch gekennzeichnet, dass im unbelasteten Zustand der Wälzlageranordnung die ersten Wälzkörper ein erstes logarithmisches Rollenprofil und die zweiten Wälzkörper ein von dem ersten logarithmischen Rollenprofil abweichendes zweites logarithmisches Rollenprofil aufweisen.

Insbesondere handelt es sich bei einer solchen Anordnung um eine dreireihige Rollendrehverbindung, bei der die beiden Axiallager jeweils die Belastungen in axialer Richtung aufnehmen und das Radiallager entsprechend die Belastungen in radialer Richtung aufnimmt.

Die erfindungsgemäße Vorrichtung hat gegenüber dem Stand der Technik den Vorteil, dass die beiden Axiallager jeweils separat an die Belastungssituation angepasst werden können und somit dem Umstand Rechnung getragen wird, dass beide Rollenlager aufgrund der Asymmetrie einer Windkraftanlage und aufgrund unterschiedlicher Betriebsmodi einer Windkraftanlage unterschiedliche Anforderungen erfüllen müssen. So können beispielsweise die ersten Wälzkörper im Hinblick auf die Langlebigkeit des ersten Rollenlagers bei "normalen" Belastungen und im Normalbetrieb (rotierende Rotornabe) optimiert werden, während die zweiten Wälzkörper im Hinblick auf maximale Tragfähigkeit des zweiten Rollenlagers bei extremen und kurzzeitigen Lastspitzen im abgeschalteten Modus (Rotornabe rotiert nicht und ist insbesondere festgestellt) optimiert werden.

Mit anderen Worten: Herkömmlicherweise werden häufig zwei gleich dimensionierte Rollenlager als Axiallager verwendet. Dabei stellt sich das Problem, dass die Rollenlager nach dem maximal zu erwartenden Lastfall dimensioniert werden müssen, da das Rotorlager auch einen Orkan schadlos überstehen können muss. Das Rollenlager, welches der Rotornabe zugewandt ist und im normalen Betrieb hauptsächlich belastet wird, wird in diesem normalen Betrieb aber stets deutlich unterhalb dieser maximal zu erwartenden Lastspitze belastet, so dass eine zu große Profilierung (auch als Konvexität oder Bombierung bezeichnet) der Wälzkörper in diesem Lager zu einem erhöhten Verschließ in der Laufbahn führt, da sich diese Wälzkörper aufgrund der geringeren Belastung zu wenig deformieren und somit nur eine verkleinerte Kontaktfläche zur Laufbahn ausbilden. Eine geringere Profilierung oder Verkleinerung des Lagers kann aber nicht gewählt werden, da andernfalls der maximal zu erwartende Lastfall nicht abdeckt ist. Insofern wird erfindungsgemäß dasjenige Rollenlager, welches im Normalbetrieb die Hauptlast trägt (hier das erste Rollenlager), mit kleinerer Profilierung ausgebildet, damit die Langlebigkeit dieses Rollenlagers im Normalbetrieb, d.h. bei normalen und geringeren Lasten, optimiert wird. Zudem wird das andere Rollenlager, welches aufgrund seiner Position hauptsächlich bei einem Stillstand der Windkraftanlage und in einem kritischen Maximallastfall (bspw. bei einem Orkan) mit hohen Lasten belastet wird (hier das zweite Rollenlager), mit größerer Profilierung ausgebildet, so dass sich in diesem Lager bei einer starken Deformation der Wälzkörper aufgrund einer hohen Last jeweils eine große Kontaktfläche zwischen den Wälzkörper und der Laufbahn ausbildet und somit eine geringere Flächenpressung bei hohen Lasten erzielt wird.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung weist auch die dritten Wälzkörper im unbelasteten Zustand der Wälzlageranordnung ein drittes logarithmisches Rollenprofil auf, wobei das dritte logarithmische Rollenprofil von dem ersten logarithmischen Rollenprofil und/oder dem zweiten logarithmischen Rollenprofil abweicht. Durch diese Ausgestaltung ist es vorteilhafterweise möglich, die Profile der radialen Wälzkörper des dritten Rollenlagers unabhängig von denen der axialen Rollenlager gezielt auf die zu erwartende Belastungssituation abzustimmen.

Gemäß einer bevorzugten Ausführungsform der vorliegenden Erfindung ist vorgesehen, dass das erste logarithmische Rollenprofil im unbelasteten Zustand der Profilfunktion

$$P_1(x) = c_1 \cdot D_{we1} \cdot \log \frac{1}{1 - \left(\frac{2 \cdot x}{L_{we1}}\right)^2}$$

genügt, wobei $D_{we1}$ dem maximalen Durchmesser der ersten Wälzkörper (6) und $L_{we1}$ der effektiven Länge der ersten Wälzkörper (6) entsprechen und $c_1$ den Logarithmuskoeffizienten der ersten Wälzkörper (6) bezeichnet, wobei das zweite logarithmische Rollenprofil im unbelasteten Zustand der Profilfunktion

$$P_2(x) = c_2 \cdot D_{we2} \cdot \log \frac{1}{1 - \left(\frac{2 \cdot x}{L_{we2}}\right)^2}$$

genügt, wobei $D_{we2}$ dem maximalen Durchmesser der zweiten Wälzkörper (8) und $L_{we2}$ der effektiven Länge der zweiten Wälzkörper (8) entsprechen und $c_2$ den Logarithmuskoeffizienten der zweiten Wälzkörper (8) bezeichnet, wobei $c_1$ kleiner als $c_2$ ist. Die Profilfunktion $P(x)$ gibt das Profil der Wälzkörper in Millimetern an. Die Profilfunktion und die in die Profilfunktion einzusetzenden Parameter sind dem Fachmann grundsätzlich und nicht zuletzt aus der DIN-Norm 26281 wohlbekannt. Vorteilhafterweise kann durch die Wahl eines entsprechenden Logarithmuskoeffizienten $c_{1,2}$ für die ersten und/oder zweiten Wälzkörper speziell die für diese Wälzkörper zu erwartende Belastungssituation berücksichtigt werden.

Beispielsweise werden somit diejenigen Wälzkörper, welche insbesondere eine hohe Lebensdauer im Normalbetrieb unter "normalen" Lasten aufweisen sollen, mit einem etwas reduzierten Logarithmuskoeffizient $c$ versehen, so dass diese Wälzkörper eine etwas reduzierte Konvexität (auch als Profilierung oder Bombierung bezeichnet) im unbelasteten Zustand aufweisen und somit eine längere Lebensdauer bei niedrigeren Lasten haben. Dies wird dadurch erzielt, dass die reduzierte Konvexität dazu führt, dass ihre Laufflächen bei niedrigeren Lasten und somit geringerer Verformung der Rolle flächig auf den Laufflächen abwälzt. Ferner werden diejenigen Wälzkörper, welche insbesondere eine hohe Tragfähigkeit bei kurzzeitig auftretenden Lastspitzen im abgeschalteten Modus bieten sollen, mit einem etwas erhöhten Logarithmuskoeffizient $c$ versehen, so dass diese Wälzkörper eine etwas erhöhte Konvexität (auch als Profilierung oder Bombierung bezeichnet) im unbelasteten Zustand aufweisen. Vorteilhafterweise wird hierdurch erzielt, dass die unter Extremlast im kritischen Lastfall stark deformierte Rolle eine höhere Kontaktfläche mit der Laufbahn aufweist und damit eine reduzierte Flächenpressung in diesem kritischen Lastfall hervorgerufen wird.

Gemäß einer bevorzugten Ausführungsform der Erfindung sind die ersten Wälzkörper und die zweiten Wälzkörper als Zylinder- oder Nadelrollen ausgebildet sind und der Logarithmuskoeffizient $c_1$ der ersten Wälzkörper liegt zwischen 0,0001 und 0,0003, vorzugsweise zwischen 0,0002 und 0,0003 und der Logarithmuskoeffizient $c_2$ der zweiten Wälzkörper liegt zwischen 0,0004 und und 0,0009, vorzugsweise zwischen 0,0005 und 0,0007.

Gemäß einer bevorzugten Ausführungsform der Erfindung sind die ersten Wälzkörper und die zweiten Wälzkörper als Kegelrollen ausgebildet und der Logarithmuskoeffizient $c_1$ der ersten Wälzkörper liegt zwischen 0,0001 und 0,0004, vorzugsweise zwischen 0,00025 und 0,00035 und besonders bevorzugt bei im Wesentlichen 0,0003 und der Logarithmuskoeffizient $c_2$ der zweiten Wälzkörper liegt zwischen 0,0005 und 0,0009, vorzugsweise zwischen 0,0006 und 0,0008 und besonders bevorzugt bei im Wesentlichen 0,0007.

Es hat sich gezeigt, dass ein Logarithmuskoeffizient $c_1$ innerhalb der vorstehend definierten Bereiche insbesondere für jenes Rollenlager besonders vorteilhaft ist, welches im Normalbetrieb eine hohe Lebensdauer aufweisen soll. Hierbei handelt es sich insbesondere um dasjenige Rollenlager, welches in axialer Richtung auf der der Rotornabe der Windkraftanlage zugewandten Seite der Wälzlageranordnung angeordnet ist. Alternativ könnte das erste Rollenlager aber auch dasjenige Rollenlager sein, welches in axialer Richtung auf der dem Generator der Windkraftanlage zugewandten Seite der Wälzlageranordnung angeordnet ist. Es hat sich weiterhin gezeigt, dass ein Logarithmuskoeffizient $c_2$ innerhalb der vorstehend definierten Bereiche insbesondere für jenes Rollenlager besonders vorteilhaft ist, welches im abgeschalteten Betrieb hohe Lastspitzen aufzunehmen hat. Hierbei handelt es sich insbesondere um dasjenige Rollenlager, welches in axialer Richtung auf der dem Generator der Windkraftanlage zugewandten Seite der Wälzlageranordnung angeordnet ist. Alternativ könnte das zweite Rollenlager aber auch dasjenige Rollenlager sein, welches in axialer Richtung auf der der Rotornabe der Windkraftanlage zugewandten Seite der Wälzlageranordnung angeordnet ist.

Gemäß einer bevorzugten Ausführungsform der vorliegenden Erfindung ist vorgesehen, dass das dritte logarithmische Rollenprofil im unbelasteten Zustand der Profilfunktion

$$P_3(x) = c_3 \cdot D_{we3} \cdot \log \frac{1}{1 - \left(\frac{2 \cdot x}{L_{we3}}\right)^2}$$

genügt, wobei $D_{we3}$ dem maximalen Durchmesser der dritten Wälzkörper und $L_{we3}$ der effektiven Länge der dritten Wälzkörper entsprechen und wobei der Logarithmuskoeffizient $c_3$ der dritten Wälzkörper ungleich einem Referenzlogarithmuskoeffizient $c_0$ von 0,00035 ist

Vorzugsweise unterscheiden sich die ersten und zweiten Wälzkörper nur in ihrer Rollenprofilierung. Das bedeutet, dass die ersten und zweiten Wälzkörper abgesehen von der unterschiedlichen Rollenprofilierung ansonsten eine identische Geometrie aufweisen. Vorzugsweise ist somit der maximale Durchmesser $D_{we2}$ der zweiten Wälzkörper gleich dem maximalen Durchmesser $D_{we1}$ der ersten Wälzkörper ($D_{we2} = D_{we1}$) und die effektive Länge $L_{we2}$ der zweiten Wälzkörper gleich der effektiven Länge $L_{we1}$ der ersten Wälzkörper ($L_{we2} = L_{we1}$).

Die eingangs genannte Aufgabe wird weiterhin durch eine Wälzlageranordnung, insbesondere für eine Windkraftanlage gelöst, aufweisend einen Außenring und einen zumindest teilweise innerhalb des Außenrings gelagerten Innenring, wobei der Außenring und der Innenring um eine Drehachse relativ zueinander drehbar sind, wobei zwischen dem Außenring und dem Innenring ein erstes Rollenlager mit ersten Wälzkörpern, ein zweites Rollenlager mit zweiten Wälzkörpern, ein drittes Rollenlager mit dritten Wälzkörpern angeordnet ist und ein viertes Rollenlager mit vierten Wälzkörpern angeordnet ist, wobei das erste Rollenlager und das zweite Rollenlager als Axiallager ausgebildet sind und das dritte Rollenlager und das vierte Rollenlager als Radiallager ausgebildet sind, dadurch gekennzeichnet, dass im unbelasteten Zustand der Wälzlageranordnung die dritten Wälzkörper ein drittes logarithmisches Rollenprofil und die vierten Wälzkörper ein von dem dritten logarithmischen Rollenprofil abweichendes viertes logarithmisches Rollenprofil aufweisen.

Insbesondere handelt es sich bei einer solchen Anordnung um eine vierreihige Rollendrehverbindung, bei der die beiden Axiallager jeweils die Belastungen in axialer Richtung aufnehmen und die beiden Radiallager entsprechend die Belastungen in radialer Richtung aufnehmen.

Gemäß einer bevorzugten Ausführungsform der vorliegenden Erfindung ist vorgesehen, dass das dritte logarithmische Rollenprofil und/oder das vierte logarithmische Rollenprofil von dem ersten logarithmischen Rollenprofil und/oder dem zweiten logarithmischen Rollenprofil abweicht.

Gemäß einer bevorzugten Ausführungsform der vorliegenden Erfindung ist vorgesehen, dass das das dritte logarithmische Rollenprofil im unbelasteten Zustand der Profilfunktion

$$P_3(x) = c_3 \cdot D_{we3} \cdot \log \frac{1}{1 - \left(\frac{2 \cdot x}{L_{we3}}\right)^2}$$

genügt, wobei $D_{we3}$ dem maximalen Durchmesser der dritten Wälzkörper (10) und $L_{we3}$ der effektiven Länge der dritten Wälzkörper (10) entsprechen und $c_3$ den Logarithmuskoeffizienten der dritten Wälzkörper (10) bezeichnet, wobei das vierte logarithmische Rollenprofil im unbelasteten Zustand der Profilfunktion

$$P_4(x) = c_4 \cdot D_{we4} \cdot \log \frac{1}{1 - \left(\frac{2 \cdot x}{L_{we4}}\right)^2}$$

genügt, wobei $D_{we4}$ dem maximalen Durchmesser der vierten Wälzkörper (12) und $L_{we4}$ der effektiven Länge der vierten Wälzkörper (12) entsprechen und $c_4$ den Logarithmuskoeffizienten der vierten Wälzkörper (12) be-

zeichnet, wobei die Logarithmuskoeffizienten $c_3$ und $c_4$ der vierten Wälzkörper (12) ungleich einem Referenzlogarithmuskoeffizient $c_0$ von 0,00035 ist. Vorteilhafterweise kann durch die Wahl eines entsprechenden Logarithmuskoeffizienten $c_{3,4}$ für die dritten und/oder vierten Wälzkörper, welcher insbesondere von dem Referenzlogarithmuskoeffizient $c_0$ abweicht, speziell die für diese Wälzkörper zu erwartende Belastungssituation berücksichtigt werden.

Gemäß einer weiteren bevorzugten Ausführungsform der vorliegenden Erfindung ist vorgesehen, dass der Logarithmuskoeffizient $c_3$ der dritten Wälzkörper kleiner als der Referenzlogarithmuskoeffizient $c_0$ ist und der Logarithmuskoeffizient $c_4$ der vierten Wälzkörper größer als der Referenzlogarithmuskoeffizient $c_0$ ist. Beispielsweise werden somit diejenigen Wälzkörper, welche insbesondere eine hohe Lebensdauer im Normalbetrieb unter "normalen" Lasten aufweisen sollen, mit einem etwas reduzierten Logarithmuskoeffizient c versehen, so dass diese Wälzkörper eine etwas reduzierte Konvexität (auch als Profilierung oder Bombierung bezeichnet) im unbelasteten Zustand aufweisen und somit eine längere Lebensdauer bei niedrigeren Lasten haben. Dies wird dadurch erzielt, dass die reduzierte Konvexität dazu führt, dass ihre Laufflächen bei niedrigeren Lasten und somit geringerer Verformung der Rolle flächig auf den Laufflächen abwälzt. Ferner werden diejenigen Wälzkörper, welche insbesondere eine hohe Tragfähigkeit bei kurzzeitig auftretenden Lastspitzen im abgeschalteten Modus bieten sollen, mit einem etwas erhöhten Logarithmuskoeffizient c versehen, so dass diese Wälzkörper eine etwas erhöhte Konvexität (auch als Profilierung oder Bombierung bezeichnet) im unbelasteten Zustand aufweisen. Vorteilhafterweise wird hierdurch erzielt, dass die unter Extremlast im kritischen Lastfall stark deformierte Rolle eine höhere Kontaktfläche mit der Laufbahn aufweist und damit eine reduzierte Flächenpressung in diesem kritischen Lastfall hervorgerufen wird.

Gemäß einer weiteren bevorzugten Ausführungsform der vorliegenden Erfindung ist vorgesehen, dass der Logarithmuskoeffizient $c_3$ des dritten Rollenlagers zwischen 0,0001 und 0,0003, vorzugsweise zwischen 0,0002 und 0,0003 liegt und der Logarithmuskoeffizient $c_4$ der vierten Wälzkörper (12) zwischen 0,0004 und und 0,0009, vorzugsweise zwischen 0,0005 und 0,0007 liegt. Es hat sich gezeigt, dass ein Logarithmuskoeffizient $c_3$ innerhalb der vorstehend definierten Bereiche insbesondere für jenes Rollenlager besonders vorteilhaft ist, welches im Normalbetrieb eine hohe Lebensdauer aufweisen soll. Hierbei handelt es sich insbesondere um dasjenige Rollenlager, welches in axialer Richtung auf der der Rotornabe der Windkraftanlage zugewandten Seite der Wälzlageranordnung angeordnet ist. Alternativ könnte das dritte Rollenlager aber auch dasjenige Rollenlager sein, welches in axialer Richtung auf der dem Generator der Windkraftanlage zugewandten Seite der Wälzlageranordnung angeordnet ist. Es hat sich weiterhin gezeigt, dass ein Logarithmuskoeffizient

$c_4$ innerhalb der vorstehend definierten Bereiche insbesondere für jenes Rollenlager besonders vorteilhaft ist, welches im abgeschalteten Betrieb hohe Lastspitzen aufzunehmen hat.

Vorzugsweise unterscheiden sich die dritten und vierten Wälzkörper nur in ihrer Rollenprofilierung. Das bedeutet, dass die dritten und vierten Wälzkörper abgesehen von der unterschiedlichen Rollenprofilierung ansonsten eine identische Geometrie aufweisen. Vorzugsweise ist somit der maximale Durchmesser $D_{we4}$ der vierten Wälzkörper gleich dem maximalen Durchmesser $D_{we3}$ der dritten Wälzkörper ($D_{we4} = D_{we3}$) und die effektive Länge $L_{we4}$ der vierten Wälzkörper gleich der effektiven Länge $L_{we3}$ der dritten Wälzkörper ($L_{we4} = L_{we3}$).

Ein weiterer Gegenstand der vorliegenden Erfindung ist eine Windkraftanlage aufweisend eine Rotornabe, an welcher wenigstens ein Rotorblatt befestigt ist, und einen Generator, welcher zur Umsetzung von kinetischer Energie in elektrische Energie ausgebildet ist, wobei ein Rotor des Generators drehfest mit der Rotornabe über eine Rotorwelle der Windkraftanlage verbunden ist, wobei die Rotornabe und/oder die Rotorwelle mittels der erfindungsgemäßen Wälzlageranordnung gelagert ist.

Alternativ ist auch denkbar, die erfindungsgemäße Wälzlageranordnung in anderen Bereichen der Windenergie wie dem Azimut- oder Blattlager der Windkraftanlage einzusetzen. Mögliche Anwendungsfälle ausserhalb der Windenergie umfassen beispielsweise Tunnelvortriebsmaschinen, Krane, Ruderpropeller, Ölübergabestationen (Floating Production Storage and Offloading Unit), Bagger, Tagebaufördergeräte.

Vorzugsweise ist der Innenring drehfest mit der Rotorwelle verbunden. Alternativ wäre aber auch denkbar, dass der Außenring drehfest mit der Rotorwelle verbunden ist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

**Kurze Beschreibung der Zeichnungen**

Figur 1    zeigt eine schematische Schnittbildansicht einer Wälzlageranordnung gemäß einer Ausführungsform der vorliegenden Erfindung.

Figur 2    zeigt eine schematische Schnittbildansicht einer Wälzlageranordnung gemäß einer Ausführungsform der vorliegenden Erfindung.

Figur 3    zeigt eine schematische Schnittbildansicht einer Wälzlageranordnung gemäß einer Ausführungsform der vorliegenden Erfindung.

**Figur 4**    zeigt eine schematische Schnittbildansicht einer Wälzlageranordnung gemäß einer Ausführungsform der vorliegenden Erfindung.

**Ausführungsformen der Erfindung**

In den verschiedenen Figuren sind gleiche Teile stets mit den gleichen Bezugszeichen versehen und werden daher in der Regel auch jeweils nur einmal benannt bzw. erwähnt.

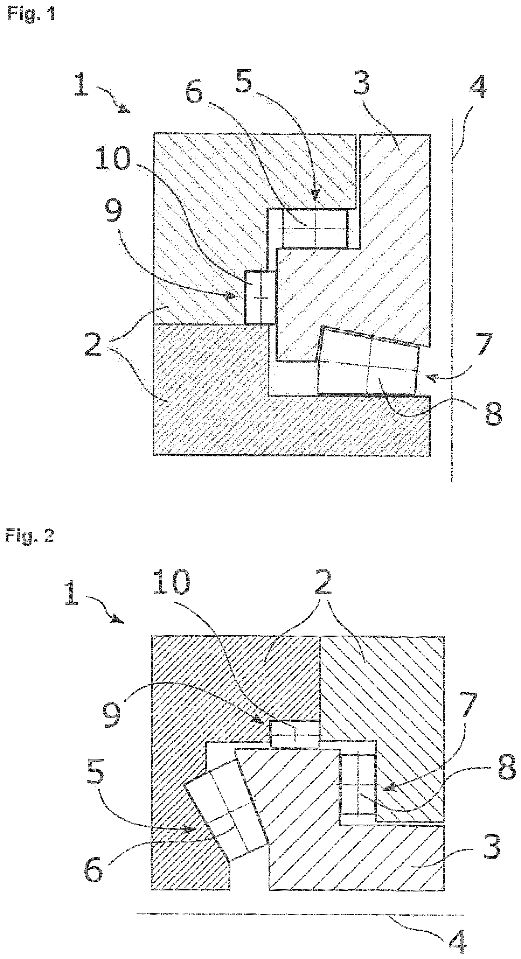

In **Figur 1** ist eine schematische Schnittbildansicht einer Wälzlageranordnung 1 gemäß einer Ausführungsform der vorliegenden Erfindung dargestellt.

Die Wälzlageranordnung 1 umfasst einen Außenring 2 und einen Innenring 3. Der zweiteilige Außenring 2 und der Innenring 3 sind um eine Drehachse 4 relativ zueinander drehbar, beispielsweise kann entweder der Innenring 3 gegenüber dem Außenring 2 oder der Außenring 2 gegenüber dem Innenring 3 gedreht werden. Der Innenring 3 ist in radialer Richtung innerhalb des Außenrings 2 angeordnet und überlappt in axialer Richtung zumindest teilweise mit dem Außenring 2. Es handelt sich hier also um eine dreireihige Rollendrehverbindung.

Zwischen dem Außenring 2 und dem Innenring 3 sind ein erstes Rollenlager 5 und ein zweites Rollenlager 7 ausgebildet. Das erste und das zweite Rollenlager 5, 7 sind in axialer Richtung zueinander versetzt angeordnet und nehmen Kräfte in axialer Richtung auf. Zusätzlich weist die Lageranordnung noch ein drittes Rollenlager 9 auf, das Kräfte in radialer Richtung aufnimmt.

Das erste Rollenlager 5 umfasst eine Mehrzahl erster Wälzkörper 6. Die ersten Wälzkörper 6 sind in einer umlaufenden Reihe von Wälzkörpern angeordnet, die jeweils vorzugsweise durch Käfige oder Distanzstücke voneinander beabstandet sind. Weiterhin ist auch eine Vollbestückung möglich, bei der Rolle an Rolle liegt. Die ersten Wälzkörper 6 sind zylinderförmig und in axialer Richtung jeweils zwischen einer am Außenring 2 ausgebildeten umlaufenden Laufbahn und einer am Innenring 3 ausgebildeten umlaufenden Laufbahn angeordnet, so dass die ersten Wälzkörper 6 mit ihren Laufflächen jeweils auf den Laufbahnen abwälzen. Die Rotationsachsen der ersten Wälzkörper 6 stehen dabei jeweils senkrecht auf der Drehachse 4 der Wälzlageranordnung 1.

Das zweite Rollenlager 7 umfasst eine Mehrzahl zweiter, kegelförmiger Wälzkörper 8. Die zweiten Wälzkörper 8 sind ebenfalls in einer umlaufenden Reihe von Wälzkörpern angeordnet, die jeweils vorzugsweise durch Käfige oder Distanzstücke voneinander beabstandet sind oder in einer Vollbestückung vorliegen. Die zweiten Wälzkörper 8 sind in axialer Richtung auch jeweils zwischen einer am Außenring 2 ausgebildeten umlaufenden Laufbahn und einer am Innenring 3 ausgebildeten umlaufenden Laufbahn angeordnet sind, so dass die zweiten Wälzkörper 8 mit ihren Laufflächen jeweils auf den Laufbahnen abwälzen.

Die in Figur 1 illustrierte Schnittdarstellung entspricht einem Schnitt durch die um die Drehachse 4 im Wesentlichen drehsymmetrische Wälzlageranordnung 1 entlang der Drehachse 4. Die ersten Wälzkörper 6 und die zweiten Wälzkörper 8 haben beide ein logarithmisches Rollenprofil. Die Wälzlageranordnung 1 gemäß einer Ausführungsform der vorliegenden Erfindung unterscheidet sich vom Stand der Technik dadurch, dass sich das logarithmische Rollenprofil der ersten Wälzkörper 6 von dem logarithmischen Rollenprofil der zweiten Wälzkörper 8 unterscheidet. Das bedeutet, dass die ersten Wälzkörper 6 eine Konvexität (auch als Profilierung oder Bombierung bezeichnet) aufweisen, die von der Konvexität der zweiten Wälzkörper 8 abweicht. Diese geometrischen Unterschiede sind allerdings zumindest derart gering, dass sie in der Prinzipskizze von Figur 1 mit bloßem Auge nicht ohne Weiteres zu erkennen sind.

Das logarithmische Rollenprofil von Wälzkörpern wird bei Rollenlagern grundsätzlich durch die Profilfunktion $P_0(x)$ beschrieben, welche gemäß Abschnitt 6 der deutschen DIN-Norm 26281 (November 2010) die konvexe Oberflächenwölbung der Lauffläche als Funktion der Variablen x in Millimetern beschreibt:

$$P_0(x) \;=\; c_0 \cdot D_{we} \cdot \log \frac{1}{1 - \left(\frac{2 \cdot x}{L_{we}}\right)^2}$$

Dabei ist $D_{we}$ der maximale Durchmesser der betreffenden Wälzkörper, während $L_{we}$ die effektive Länge der betreffenden Wälzkörper beschreibt. Die Variable $c_0$ steht für eine dimensionslose Konstante, welche die Konvexität beschreibt und daher in der vorliegenden Beschreibung als Logarithmuskoeffizient bezeichnet wird. Aus der genannten DIN-Norm 26281 geht hervor, dass für Zylinderrollenlager und Nadellager stets ein Logarithmuskoeffizient $c_0$ in Höhe von $c_0 = 0{,}00035$, welcher im Folgenden als Referenzlogarithmuskoeffizient $c_0$ bezeichnet wird, verwendet wird. Für Kegelrollen wird dagegen ein Logarithmuskoeffizient von 0,00045 empfohlen. Die aus dem Stand der Technik bekannten Wälzkörper weisen somit eine bestimmte Konvexität auf.

Die ersten Wälzkörper 6 der Wälzlageranordnung 1 gemäß der ersten Ausführungsform der vorliegenden Erfindung sind nun derart ausgebildet, dass sich ihre Profilfunktion $P_1(x)$ von der Profilfunktion $P_2(x)$ der zweiten Wälzkörper 8 unterscheidet. Für die Profilfunktion $P_1(x)$ gilt:

$$P_1(x) \;=\; c_1 \cdot D_{we1} \cdot \log \frac{1}{1 - \left(\frac{2 \cdot x}{L_{we1}}\right)^2}$$

$D_{we1}$ steht dabei für den maximalen Durchmesser der ersten Wälzkörper 6, während $L_{we1}$ für die effektive Länge der ersten Wälzkörper 6 steht. Für die Profilfunktion $P_2(x)$ gilt analog:

$$P_2(x) = c_2 \cdot D_{we2} \cdot \log \frac{1}{1-\left(\frac{2\cdot x}{L_{we2}}\right)^2}$$

$$mit \ c_2 \neq c_1$$

$D_{we1}$ steht dabei für den maximalen Durchmesser der zweiten Wälzkörper 8, während $L_{we2}$ für die effektive Länge der zweiten Wälzkörper 8 steht.

Denkbar ist, dass die Wälzlageranordnung 1 als Hauptlager einer Rotorwelle einer Windkraftanlage dient. Alternativ ist es auch möglich, die erfindungsgemäße Wälzlageranordnung in anderen Bereichen der Windenergie wie dem Azimut- oder Blattlager der Windkraftanlage einzusetzen. Mögliche Anwendungsfälle ausserhalb der Windenergie umfassen beispielsweise Tunnelvortriebsmaschinen, Krane, Ruderpropeller, Ölübergabestationen (Floating Production Storange and Offloading Unit), Bagger, Tagebaufördergeräte.

In **Figur 2** ist eine schematische Schnittbildansicht einer Wälzlageranordnung 1 zur Rotorwellenlagerung in einer Windkraftanlage gemäß einer Ausführungsform der vorliegenden Erfindung dargestellt. Die Bezugszeichen der Komponenten sind analog zu Figur 1. Es handelt sich auch hier um eine dreireihige Rollendrehverbindung, wobei hier im Gegensatz zu Figur 1 die Drehachse 4 horizontal liegt.

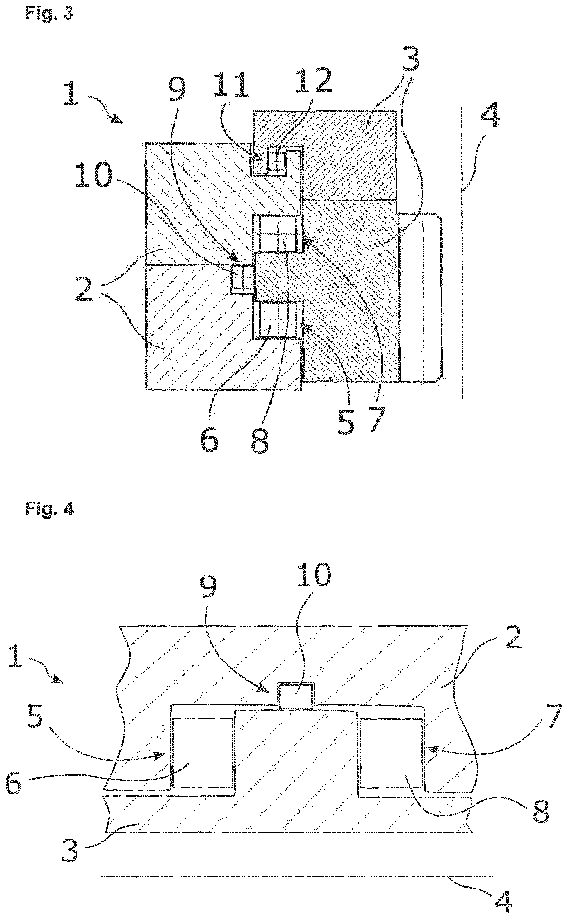

In **Figur 3** ist eine schematische Schnittbildansicht einer Wälzlageranordnung 1 zur Rotorwellenlagerung in einer Windkraftanlage gemäß einer Ausführungsform der vorliegenden Erfindung dargestellt.

Die Wälzlageranordnung 1 umfasst einen Außenring 2 und einen Innenring 3. Der Außenring 2 und der Innenring 3 sind um eine Drehachse 4 relativ zueinander drehbar, beispielsweise kann entweder der Innenring 3 gegenüber dem Außenring 2 oder der Außenring 2 gegenüber dem Innenring 3 gedreht werden. Der Innenring 3 ist in radialer Richtung innerhalb des Außenrings 2 angeordnet und überlappt in axialer Richtung zumindest teilweise mit dem Außenring 2.

Ähnlich wie in Figur 1 sind zwischen dem Außenring 2 und dem Innenring 3 sind ein erstes Rollenlager 5 und ein zweites Rollenlager 7 ausgebildet. Das erste und das zweite Rollenlager 5, 7 sind in axialer Richtung zueinander versetzt angeordnet und nehmen Kräfte in axialer Richtung auf. Im Vergleich mit Figur 1 weist die Lageranordnung neben einem dritten Rollenlager 9 zusätzlich ein viertes Rollenlager 11 auf, so dass Kräfte in radialer Richtung von beiden Lagern 9, 11 aufgenommen werden. Es handelt sich hier also um eine vierreihige Rollendrehverbindung

Die in Figur 2 illustrierte Schnittdarstellung entspricht einem Schnitt durch die um die Drehachse 4 im Wesentlichen drehsymmetrische Wälzlageranordnung 1 entlang der Drehachse 4. Die dritten Wälzkörper 10 und die vierten Wälzkörper 12 gemäß der dargestellten Ausführungsform, haben beide ein logarithmisches Rollenprofil von der weiter oben beschriebenen Form, wie sie auch in der DIN-Norm 26281 beschrieben ist. Mit analogen Bezeichnungen für die Koeffizienten ergibt sich das Profil der dritten Wälzkörper 10 nach

$$P_3(x) = c_3 \cdot D_{we3} \cdot \log \frac{1}{1-\left(\frac{2\cdot x}{L_{we3}}\right)^2}$$

und das der vierten Wälzkörper 12 nach

$$P_4(x) = 4 \cdot D_{we4} \cdot \log \frac{1}{1-\left(\frac{2\cdot x}{L_{we4}}\right)^2}$$

Die abgebildete Wälzlageranordnung 1 unterscheidet sich vom Stand der Technik dadurch, dass sich das logarithmische Rollenprofil der dritten Wälzkörper 10 von dem logarithmischen Rollenprofil der vierten Wälzkörper 12 unterscheidet. Das bedeutet, dass die dritten Wälzkörper 10 eine Konvexität (auch als Profilierung oder Bombierung bezeichnet) aufweisen, die von der Konvexität der zweiten Wälzkörper 12 abweicht. Diese geometrischen Unterschiede sind allerdings zumindest derart gering, dass sie in der Prinzipskizze von Figur 2 mit bloßem Auge nicht ohne Weiteres zu erkennen sind.

Die dritten Wälzkörper 10 der Wälzlageranordnung 1 sind nun derart ausgebildet, dass sich ihre Profilfunktion $P_3(x)$ nicht nur von der Profilfunktion $P_4(x)$ der vierten Wälzkörper 12 sondern vorzugsweise auch von der Profilfunktion $P_0(x)$ mit einem Referenzlogarithmuskoeffizient $c_0 = 0{,}00035$ unterscheidet. Für die Profilfunktion $P_3(x)$ gilt:

$$P_3(x) = c_3 \cdot D_{we3} \cdot \log \frac{1}{1-\left(\frac{2\cdot x}{L_{we3}}\right)^2}$$

$$mit \ c_3 \neq 0{,}00035$$

$D_{we3}$ steht dabei für den maximalen Durchmesser der dritten Wälzkörper 10, während $L_{we3}$ für die effektive Länge der dritten Wälzkörper 10 steht.

Das Gleiche gilt auch für die vierten Wälzkörper 12. Auch die vierten Wälzkörper 12 der Wälzlageranordnung 1 gemäß einer Ausführungsform der vorliegenden Erfindung sind derart ausgebildet, dass sich ihre Profilfunktion $P_4(x)$ nicht nur von der Profilfunktion $P_3(x)$ der dritten Wälzkörper 10 sondern vorzugsweise auch von der Profilfunktion $P_0(x)$ mit einem Referenzlogarithmuskoeffizient $c_0 = 0{,}00035$ unterscheidet. Für die Profilfunktion $P_4(x)$ gilt:

$$P_4(x) = c_4 \cdot D_{we4} \cdot \log \frac{1}{1-\left(\frac{2 \cdot x}{L_{we4}}\right)^2}$$

$$mit\ c_4 \neq c_3\ und\ c_4 \neq 0{,}00035$$

$D_{we4}$ steht dabei für den maximalen Durchmesser der vierten Wälzkörper 12, während $L_{we4}$ für die effektive Länge der vierten Wälzkörper 12 steht.

Denkbar ist, dass die Wälzlageranordnung 1 als Hauptlager einer Rotorwelle einer Windkraftanlage dient. Wie bei dem in Figur 1 dargestellten Wälzlagern sind jedoch auch hier die zu Figur 1 angegeben, alternativen Anwendungsmöglichkeiten denkbar.

In **Figur 4** ist eine schematische Schnittbildansicht einer Wälzlageranordnung 1 gemäß einer weiteren Ausführungsform der vorliegenden Erfindung dargestellt. Es handelt sich hier, wie in den **Figuren 1** und **2** um eine dreireihige Rollendrehverbindung, hier jedoch mit zwei Zylinderrollenlagern 5 und 7 zur Aufnahme axialer Kräfte und einem weiteren Zylinderrollenlager 9 zur Aufnahme von Kräften in radialer Richtung. Analog zu den **Figuren 1** und **2** weisen das erste Rollenlager 5 und das zweite Rollenlager 7 voneinander abweichende logarithmische Rollenprofile auf.

## BEZUGSZEICHENLISTE

| | |
|---|---|
| 1 | Wälzlageranordnung |
| 2 | Außenring |
| 3 | Innenring |
| 4 | Drehachse |
| 5 | Erstes Rollenlager |
| 6 | Erste Wälzkörper |
| 7 | Zweites Rollenlager |
| 8 | Zweite Wälzkörper |
| 9 | Drittes Rollenlager |
| 10 | Dritte Wälzkörper |
| 11 | Viertes Rollenlager |
| 12 | Vierte Wälzkörper |

## Patentansprüche

1. Wälzlageranordnung (1), insbesondere für eine Windkraftanlage, aufweisend einen Außenring (2) und einen zumindest teilweise innerhalb des Außenrings (2) gelagerten Innenring (3), wobei der Außenring (2) und der Innenring (3) um eine Drehachse (4) relativ zueinander drehbar sind, wobei zwischen dem Außenring (2) und dem Innenring (3) ein erstes Rollenlager (5) mit ersten Wälzkörpern (6), ein zweites Rollenlager (7) mit zweiten Wälzkörpern (8) und ein drittes Rollenlager (9) mit dritten Wälzkörpern (10) angeordnet ist, wobei das erste Rollenlager (5) und das zweite Rollenlager (7) als Axiallager ausgebildet sind und das dritte Rollenlager (9) als Radiallager ausgebildet ist, **dadurch gekennzeichnet, dass** im unbelasteten Zustand der Wälzlageranordnung (1) die ersten Wälzkörper (6) ein erstes logarithmisches Rollenprofil und die zweiten Wälzkörper (8) ein von dem ersten logarithmischen Rollenprofil abweichendes zweites logarithmisches Rollenprofil aufweisen.

2. Wälzlageranordnung (1) nach Anspruch 1, wobei die dritten Wälzkörper (10) im unbelasteten Zustand der Wälzlageranordnung (1) ein drittes logarithmisches Rollenprofil aufweisen und das dritte logarithmische Rollenprofil von dem ersten logarithmischen Rollenprofil und/oder dem zweiten logarithmischen Rollenprofil abweicht.

3. Wälzlageranordnung (1) nach Anspruch 1 oder 2, wobei das erste logarithmische Rollenprofil im unbelasteten Zustand der Profilfunktion

$$P_1(x) = c_1 \cdot D_{we1} \cdot \log \frac{1}{1-\left(\frac{2 \cdot x}{L_{we1}}\right)^2}$$

genügt, wobei $D_{we1}$ dem maximalen Durchmesser der ersten Wälzkörper (6) und $L_{we1}$ der effektiven Länge der ersten Wälzkörper (6) entsprechen und $c_1$ den Logarithmuskoeffizienten der ersten Wälzkörper (6) bezeichnet, wobei das zweite logarithmische Rollenprofil im unbelasteten Zustand der Profilfunktion

$$P_2(x) = c_2 \cdot D_{we2} \cdot \log \frac{1}{1-\left(\frac{2 \cdot x}{L_{we2}}\right)^2}$$

genügt, wobei $D_{we2}$ dem maximalen Durchmesser der zweiten Wälzkörper (8) und $L_{we2}$ der effektiven Länge der zweiten Wälzkörper (8) entsprechen und $c_2$ den Logarithmuskoeffizienten der zweiten Wälzkörper (8) bezeichnet, wobei $c_1$ kleiner als $c_2$ ist.

4. Wälzlageranordnung (1) nach einem der vorhergehenden Ansprüche, wobei die ersten Wälzkörper (6) und die zweiten Wälzkörper (8) als Zylinder- oder Nadelrollen ausgebildet sind und der Logarithmuskoeffizient $c_1$ der ersten Wälzkörper (6) zwischen 0,0001 und 0,0003, vorzugsweise zwischen 0,0002 und 0,0003 liegt und der Logarithmuskoeffizient $c_2$ der zweiten Wälzkörper (8) zwischen 0,0004 und und 0,0009, vorzugsweise zwischen 0,0005 und 0,0007 liegt.

**5.** Wälzlageranordnung (1) nach einem der vorhergehenden Ansprüche, wobei die ersten Wälzkörper (6) und/oder die zweiten Wälzkörper (8) als Kegelrollen ausgebildet sind und der Logarithmuskoeffizient $c_1$ der ersten Wälzkörper (6) zwischen 0,0001 und 0,0004, vorzugsweise zwischen 0,00025 und 0,00035 und besonders bevorzugt bei im Wesentlichen 0,0003 liegt und der Logarithmuskoeffizient $c_2$ der zweiten Wälzkörper (8) zwischen 0,0005 und 0,0009, vorzugsweise zwischen 0,0006 und 0,0008 und besonders bevorzugt bei im Wesentlichen 0,0007 liegt.

**6.** Wälzlageranordnung (1) einem der vorhergehenden Ansprüche, wobei das dritte logarithmische Rollenprofil im unbelasteten Zustand der Profilfunktion

$$P_3(x) = c_3 \cdot D_{we3} \cdot \log \frac{1}{1 - \left(\dfrac{2 \cdot x}{L_{we3}}\right)^2}$$

genügt, wobei $D_{we3}$ dem maximalen Durchmesser der dritten Wälzkörper (10) und $L_{we3}$ der effektiven Länge der dritten Wälzkörper (10) entsprechen und wobei der Logarithmuskoeffizient $c_3$ der dritten Wälzkörper (10) ungleich einem Referenzlogarithmuskoeffizient $c_0$ von 0,00035 ist.

**7.** Wälzlageranordnung (1) nach einem der vorhergehenden Ansprüche, wobei sich die ersten und zweiten Wälzkörper (6, 8) nur in ihrer Rollenprofilierung voneinander unterscheiden und insbesondere die gleiche effektive Länge $L_{we1,2}$ und den gleichen maximalen Durchmesser $D_{we1,2}$ aufweisen.

**8.** Wälzlageranordnung (1), insbesondere für eine Windkraftanlage, aufweisend einen Außenring (2) und einen zumindest teilweise innerhalb des Außenrings (2) gelagerten Innenring (3), wobei der Außenring (2) und der Innenring (3) um eine Drehachse (4) relativ zueinander drehbar sind, wobei zwischen dem Außenring (2) und dem Innenring (3) ein erstes Rollenlager (5) mit ersten Wälzkörpern (6), ein zweites Rollenlager (7) mit zweiten Wälzkörpern (8), ein drittes Rollenlager (9) mit dritten Wälzkörpern (10) angeordnet ist und ein viertes Rollenlager (11) mit vierten Wälzkörpern (12) angeordnet ist, wobei das erste Rollenlager (5) und das zweite Rollenlager (7) als Axiallager ausgebildet sind und das dritte Rollenlager (9) und das vierte Rollenlager (11) als Radiallager ausgebildet sind, **dadurch gekennzeichnet, dass** im unbelasteten Zustand der Wälzlageranordnung (1) die dritten Wälzkörper (10) ein drittes logarithmisches Rollenprofil und die vierten Wälzkörper (12) ein von dem dritten logarithmischen Rollenprofil abweichendes viertes logarithmisches Rollenprofil aufweisen.

**9.** Wälzlageranordnung (1) nach Anspruch 8, wobei das dritte logarithmische Rollenprofil und/oder das vierte logarithmische Rollenprofil von dem ersten logarithmischen Rollenprofil und/oder dem zweiten logarithmischen Rollenprofil abweicht.

**10.** Wälzlageranordnung (1) nach Anspruch 8 oder 9, wobei das dritte logarithmische Rollenprofil im unbelasteten Zustand der Profilfunktion

$$P_3(x) = c_3 \cdot D_{we3} \cdot \log \frac{1}{1 - \left(\dfrac{2 \cdot x}{L_{we3}}\right)^2}$$

genügt, wobei $D_{we3}$ dem maximalen Durchmesser der dritten Wälzkörper (10) und $L_{we3}$ der effektiven Länge der dritten Wälzkörper (10) entsprechen und $c_3$ den Logarithmuskoeffizienten der dritten Wälzkörper (10) bezeichnet, wobei das vierte logarithmische Rollenprofil im unbelasteten Zustand der Profilfunktion

$$P_4(x) = c_4 \cdot D_{we4} \cdot \log \frac{1}{1 - \left(\dfrac{2 \cdot x}{L_{we4}}\right)^2}$$

genügt, wobei $D_{we4}$ dem maximalen Durchmesser der vierten Wälzkörper (12) und $L_{we4}$ der effektiven Länge der vierten Wälzkörper (12) entsprechen und $c_4$ den Logarithmuskoeffizienten der vierten Wälzkörper (12) bezeichnet, wobei die Logarithmuskoeffizienten $c_3$ und $c_4$ der vierten Wälzkörper (12) ungleich einem Referenzlogarithmuskoeffizient $c_0$ von 0,00035 ist.

**11.** Wälzlageranordnung (1) nach einem der Ansprüche 8 bis 10, wobei der Logarithmuskoeffizient $c_3$ der dritten Wälzkörper (10) kleiner als der Referenzlogarithmuskoeffizient $c_0$ ist und der Logarithmuskoeffizient $c_4$ der vierten Wälzkörper (12) größer als der Referenzlogarithmuskoeffizient $c_0$ ist.

**12.** Wälzlageranordnung (1) nach einem Ansprüche 8 bis 11, wobei der Logarithmuskoeffizient $c_3$ der dritten Wälzkörper (10) zwischen 0,0001 und 0,0003, vorzugsweise zwischen 0,0002 und 0,0003 liegt und der Logarithmuskoeffizient $c_4$ der vierten Wälzkörper (12) zwischen 0,0004 und und 0,0009, vorzugsweise zwischen 0,0005 und 0,0007 liegt,

**13.** Wälzlageranordnung (1) nach einem der Ansprüche 8 bis 12, wobei sich die dritten und vierten Wälzkörper (10, 12) nur in ihrer Rollenprofilierung voneinander unterscheiden und insbesondere die gleiche effektive Länge $L_{we3,4}$ und den gleichen maximalen Durchmesser $D_{we3,4}$ aufweisen.

14. Windkraftanlage aufweisend eine Rotornabe, an welcher wenigstens ein Rotorblatt befestigt ist, und einen Generator, welcher zur Umsetzung von kinetischer Energie in elektrische Energie ausgebildet ist, wobei ein Rotor des Generators drehfest mit der Rotornabe über eine Rotorwelle der Windkraftanlage verbunden ist, **dadurch gekennzeichnet, dass** die Rotornabe und/oder die Rotorwelle mittels der Wälzlageranordnung (1) nach einem der vorhergehenden Ansprüche gelagert ist.

**Claims**

1. Rolling-bearing arrangement (1), in particular for a wind turbine, having an outer ring (2) and having an inner ring (3), which is mounted at least partially within the outer ring (2), wherein the outer ring (2) and the inner ring (3) are rotatable relative to one another about an axis of rotation (4), wherein, between the outer ring (2) and the inner ring (3), there is arranged a first roller bearing (5) with first rolling bodies (6), a second roller bearing (7) with second rolling bodies (8) and a third roller bearing (9) with third rolling bodies (10), wherein the first roller bearing (5) and the second roller bearing (7) are in the form of axial bearings and the third roller bearing (9) is in the form of a radial bearing, **characterized in that**, in the unloaded state of the rolling-bearing arrangement (1), the first rolling bodies (6) have a first logarithmic roller profile and the second rolling bodies (8) have a second logarithmic roller profile, which differs from the first logarithmic roller profile.

2. Rolling-bearing arrangement (1) according to Claim 1, wherein, in the unloaded state of the rolling-bearing arrangement (1), the third rolling bodies (10) have a third logarithmic roller profile, and the third logarithmic roller profile differs from the first logarithmic roller profile and/or the second logarithmic roller profile.

3. Rolling-bearing arrangement (1) according to Claim 1 or 2, wherein the profile function

$$P_1(x) = c_1 \cdot D_{we1} \cdot \log \frac{1}{1 - \left(\frac{2 \cdot x}{L_{we1}}\right)^2}$$

is satisfied by the first logarithmic roller profile in the unloaded state, where $D_{we1}$ corresponds to the maximum diameter of the first rolling bodies (6) and $L_{we1}$

corresponds to the effective length of the first rolling bodies (6) and $c_1$ denotes the logarithm coefficient of the first rolling bodies (6), wherein the profile function

$$P_2(x) = c_2 \cdot D_{we2} \cdot \log \frac{1}{1 - \left(\frac{2 \cdot x}{L_{we2}}\right)^2}$$

is satisfied by the second logarithmic roller profile in the unloaded state, where $D_{we2}$ corresponds to the maximum diameter of the second rolling bodies (8) and $L_{we2}$ corresponds to the effective length of the second rolling bodies (8) and $c_2$ denotes the logarithm coefficient of the second rolling bodies (8), where $c_1$ is smaller than $c_2$.

4. Rolling-bearing arrangement (1) according to one of the preceding claims, wherein the first rolling bodies (6) and the second rolling bodies (8) are formed as cylindrical rollers or needle rollers, and the logarithm coefficient $c_1$ of the first rolling bodies (6) lies between 0.0001 and 0.0003, preferably between 0.0002 and 0.0003, and the logarithm coefficient $c_2$ of the second rolling bodies (8) lies between 0.0004 and 0.0009, preferably between 0.0005 and 0.0007.

5. Rolling-bearing arrangement (1) according to one of the preceding claims, wherein the first rolling bodies (6) and/or the second rolling bodies (8) are formed as tapered rollers, and the logarithm coefficient $c_1$ of the first rolling bodies (6) lies between 0.0001 and 0.0004, preferably between 0.00025 and 0.00035, and is particularly preferably essentially 0.0003, and the logarithm coefficient $c_2$ of the second rolling bodies (8) lies between 0.0005 and 0.0009, preferably between 0.0006 and 0.0008, and is particularly preferably essentially 0.0007.

6. Rolling-bearing arrangement (1) according to one of the preceding claims, wherein the profile function

$$P_3(x) = c_3 \cdot D_{we3} \cdot \log \frac{1}{1 - \left(\frac{2 \cdot x}{L_{we3}}\right)^2}$$

is satisfied by the third logarithmic roller profile in the unloaded state, where $D_{we3}$ corresponds to the maximum diameter of the third rolling bodies (10) and $L_{we3}$ corresponds to the effective length of the third rolling bodies (10), and where the logarithm coefficient $c_3$ of the third rolling bodies (10) is not equal to a reference logarithm coefficient $c_0$ of 0.00035.

7. Rolling-bearing arrangement (1) according to one of the preceding claims, wherein the first and second rolling bodies (6, 8) differ from one another only in terms of their roller profiling and have in particular the same effective length $L_{we1,2}$ and the same maximum diameter $D_{we1,2}$.

8. Rolling-bearing arrangement (1), in particular for a wind turbine, having an outer ring (2) and having an inner ring (3), which is mounted at least partially within the outer ring (2), wherein the outer ring (2) and the inner ring (3) are rotatable relative to one another about an axis of rotation (4), wherein, between the outer ring (2) and the inner ring (3), there is arranged a first roller bearing (5) with first rolling bodies (6), a second roller bearing (7) with second rolling bodies (8), a third roller bearing (9) with third rolling bodies (10) and a fourth roller bearing (11) with fourth rolling bodies (12), wherein the first roller bearing (5) and the second roller bearing (7) are in the form of axial bearings and the third roller bearing (9) and the fourth roller bearing (11) are in the form of radial bearings, **characterized in that**, in the unloaded state of the rolling-bearing arrangement (1), the third rolling bodies (10) have a third logarithmic roller profile and the fourth rolling bodies (12) have a fourth logarithmic roller profile, which differs from the third logarithmic roller profile.

9. Rolling-bearing arrangement (1) according to Claim 8, wherein the third logarithmic roller profile and/or the fourth logarithmic roller profile differ(s) from the first logarithmic roller profile and/or the second logarithmic roller profile.

10. Rolling-bearing arrangement (1) according to Claim 8 or 9, wherein the profile function

$$P_3(x) = c_3 \cdot D_{we3} \cdot \log \frac{1}{1 - \left(\frac{2 \cdot x}{L_{we3}}\right)^2}$$

is satisfied by the third logarithmic roller profile in the unloaded state, where $D_{we3}$ corresponds to the maximum diameter of the third rolling bodies (10) and $L_{we3}$ corresponds to the effective length of the third rolling bodies (10) and $c_3$ denotes the logarithm coefficient of the third rolling bodies (10), wherein the profile function

$$P_4(x) = c_4 \cdot D_{we4} \cdot \log \frac{1}{1 - \left(\frac{2 \cdot x}{L_{we4}}\right)^2}$$

is satisfied by the fourth logarithmic roller profile in the unloaded state, where $D_{we4}$ corresponds to the maximum diameter of the fourth rolling bodies (12) and $L_{we4}$ corresponds to the effective length of the fourth rolling bodies (12) and $c_4$ denotes the logarithm coefficient of the fourth rolling bodies (12), where the logarithm coefficient $c_3$ and the logarithm coefficient $c_4$ of the fourth rolling bodies (12) are not equal to a reference logarithm coefficient $c_0$ of 0.00035.

11. Rolling-bearing arrangement (1) according to one of Claims 8 to 10, wherein the logarithm coefficient $c_3$ of the third rolling bodies (10) is smaller than the reference logarithm coefficient $c_0$ and the logarithm coefficient $c_4$ of the fourth rolling bodies (12) is larger than the reference logarithm coefficient $c_0$.

12. Rolling-bearing arrangement (1) according to one of Claims 8 to 11, wherein the logarithm coefficient $c_3$ of the third rolling bodies (10) lies between 0.0001 and 0.0003, preferably between 0.0002 and 0.0003, and the logarithm coefficient $c_4$ of the fourth rolling bodies (12) lies between 0.0004 and 0.0009, preferably between 0.0005 and 0.0007.

13. Rolling-bearing arrangement (1) according to one of Claims 8 to 12, wherein the third and fourth rolling bodies (10, 12) differ from one another only in terms of their roller profiling and have in particular the same effective length $L_{we3,4}$ and the same maximum diameter $D_{we3,4}$.

14. Wind turbine having a rotor hub to which at least one rotor blade is fastened, and having a generator which is configured for converting kinetic energy into electrical energy, wherein a rotor of the generator is connected rotationally conjointly to the rotor hub via a rotor shaft of the wind turbine, **characterized in that** the rotor hub and/or the rotor shaft are/is mounted by means of the rolling-bearing arrangement (1) according to one of the preceding claims.

**Revendications**

1. Ensemble de paliers à roulement (1), en particulier pour une éolienne, présentant une bague extérieure (2) et une bague intérieure (3) logée au moins partiellement à l'intérieur de la bague extérieure (2), la bague extérieure (2) et la bague intérieure (3) pouvant tourner l'une par rapport à l'autre sur un axe de rotation (4), dans lequel un premier palier à rouleaux (5) pourvu de premiers éléments roulants (6), un deuxième palier à rouleaux (7) pourvu de deuxièmes éléments roulants (8) et un troisième palier à rouleaux (9) pourvu de troisièmes éléments roulants (10) sont disposés entre la bague extérieure (2) et la bague intérieure (3), le premier palier à rouleaux (5) et le deuxième palier à rouleaux (7) étant réalisés sous forme de paliers axiaux et le troisième palier à rouleaux (9) étant réalisé sous forme de palier radial,

**caractérisé en ce qu'**à l'état non chargé de l'ensemble de paliers à roulement (1), les premiers éléments roulants (6) présentent un premier profil de rouleau logarithmique et les deuxièmes éléments roulants (8) présentent un deuxième profil de rouleau logarithmique différent du premier profil de rouleau logarithmique.

2. Ensemble de paliers à roulement (1) selon la revendication 1, dans lequel les troisièmes éléments roulants (10), à l'état non chargé de l'ensemble de paliers à roulement (1), présentent un troisième profil de rouleau logarithmique, et le troisième profil de rouleau logarithmique est différent du premier profil de rouleau logarithmique et/ou du deuxième profil de rouleau logarithmique.

3. Ensemble de paliers à roulement (1) selon la revendication 1 ou 2, dans lequel le premier profil de rouleau logarithmique à l'état non chargé satisfait la fonction de profil

$$P_1(x) = c_1 \cdot D_{we1} \cdot log \frac{1}{1 - \left(\frac{2 \cdot x}{L_{we1}}\right)^2}$$

où $D_{we1}$ correspond au diamètre maximal des premiers éléments roulants (6) et $L_{we1}$ correspond à la longueur effective des premiers éléments roulants (6), et $c_1$ désigne le coefficient logarithmique des premiers éléments roulants (6), le deuxième profil de rouleau logarithmique à l'état non chargé satisfaisant la fonction de profil

$$P_2(x) = c_2 \cdot D_{we2} \cdot log \frac{1}{1 - \left(\frac{2 \cdot x}{L_{we2}}\right)^2}$$

où $D_{we2}$ correspond au diamètre maximal des deuxièmes éléments roulants (8) et $L_{we2}$ correspond à la longueur effective des deuxièmes éléments roulants (8), et $c_2$ désigne le coefficient logarithmique des deuxièmes éléments roulants (8), $c_1$ étant inférieur à $c_2$.

4. Ensemble de paliers à roulement (1) selon l'une quelconque des revendications précédentes, dans lequel les premiers éléments roulants (6) et les deuxièmes éléments roulants (8) sont réalisés sous forme de rouleaux cylindriques ou d'aiguilles, et le coefficient logarithmique $c_1$ des premiers éléments roulants (6) est compris entre 0,0001 et 0,0003, de préférence entre 0,0002 et 0,0003, et le coefficient logarithmique $c_2$ des deuxièmes éléments roulants (8) est compris entre 0,0004 et 0,0009, de préférence entre 0,0005 et 0,0007.

5. Ensemble de paliers à roulement (1) selon l'une quelconque des revendications précédentes, dans lequel les premiers éléments roulants (6) et/ou les deuxièmes éléments roulants (8) sont réalisés sous forme de rouleaux coniques, et le coefficient logarithmique $c_1$ des premiers éléments roulants (6) est compris entre 0,0001 et 0,0004, de préférence entre 0,00025 et 0,00035 et est de manière particulièrement préférée substantiellement égal à 0,0003, et le coefficient logarithmique $c_2$ des deuxièmes éléments roulants (8) est compris entre 0,0005 et 0,0009, de préférence entre 0,0006 et 0,0008 et est de manière particulièrement préférée substantiellement égal à 0,0007.

6. Ensemble de paliers à roulement (1) selon l'une quelconque des revendications précédentes, dans lequel le troisième profil de rouleau logarithmique à l'état non chargé satisfait la fonction de profil

$$P_3(x) = c_3 \cdot D_{we3} \cdot log \frac{1}{1 - \left(\frac{2 \cdot x}{L_{we3}}\right)^2}$$

où $D_{we3}$ correspond au diamètre maximal des troisièmes éléments roulants (10) et $L_{we3}$ correspond à la longueur effective des troisièmes éléments roulants (10), et dans lequel le coefficient logarithmique $c_3$ des troisièmes éléments roulants (10) est différent d'un coefficient logarithmique de référence $c_0$ de 0,00035.

7. Ensemble de paliers à roulement (1) selon l'une quelconque des revendications précédentes, dans lequel les premiers et deuxièmes éléments roulants (6, 8) ne se distinguent que par leur profilage de rouleau et présentent en particulier la même longueur effective $L_{we1,2}$ et le même diamètre maximal $D_{we1,2}$.

8. Ensemble de paliers à roulement (1), en particulier pour une éolienne, présentant une bague extérieure (2) et une bague intérieure (3) logée au moins partiellement à l'intérieur de la bague extérieure (2), la bague extérieure (2) et la bague intérieure (3) pouvant tourner l'une par rapport à l'autre sur un axe de rotation (4), dans lequel, entre la bague extérieure (2) et la bague intérieure (3), un premier palier à rouleaux (5) pourvu de premiers éléments roulants (6), un deuxième palier à rouleaux (7) pourvu de deuxièmes éléments roulants (8), un troisième palier à rouleaux (9) pourvu de troisièmes éléments roulants (10) sont disposés, et un quatrième palier à rouleaux (11) pourvu de quatrièmes éléments roulants (12) est disposé, dans lequel le premier palier à rouleaux (5) et le deuxième palier à rouleaux (7) sont réalisés sous forme de paliers axiaux et le troisième palier à rouleaux (9) et le quatrième palier à rouleaux (11) sont réalisés sous forme de paliers radiaux, **caractérisé en ce qu'**à l'état non chargé de l'ensemble de paliers à roulement (1), les troisièmes éléments roulants (10) présentent un troisième profil de rouleau logarithmique, et les quatrièmes éléments roulants (12) présentent un quatrième profil de rouleau logarithmique différent du troisième profil de rouleau logarithmique.

9. Ensemble de paliers à roulement (1) selon la revendication 8, dans lequel le troisième profil de rouleau logarithmique et/ou le quatrième profil de rouleau logarithmique est différent du premier profil de rouleau logarithmique et/ou du deuxième profil de rouleau logarithmique.

10. Ensemble de paliers à roulement (1) selon la revendication 8 ou 9, dans lequel le troisième profil de rouleau logarithmique à l'état non chargé satisfait la fonction de profil

$$P_3(x) = c_3 \cdot D_{we3} \cdot log \frac{1}{1 - \left(\frac{2 \cdot x}{L_{we3}}\right)^2}$$

où $D_{we3}$ correspond au diamètre maximal des troisièmes éléments roulants (10) et $L_{we3}$ correspond à la longueur effective des troisièmes éléments roulants (10), et $c_3$ désigne le coefficient logarithmique des troisièmes éléments roulants (10), le quatrième profil de rouleau logarithmique à l'état non chargé satisfaisant la fonction de profil

$$P_4(x) = c_4 \cdot D_{we4} \cdot log \frac{1}{1 - \left(\frac{2 \cdot x}{L_{we4}}\right)^2}$$

où $D_{we4}$ correspond au diamètre maximal des quatrièmes éléments roulants (12) et $L_{we4}$ correspond à la longueur effective des quatrièmes éléments roulants (12), et $c_4$ désigne le coefficient logarithmique des quatrièmes éléments roulants (12), les coefficients logarithmiques $c_3$ et $c_4$ des quatrièmes éléments roulants (12) étant différents d'un coefficient logarithmique de référence $c_0$ de 0,00035.

11. Ensemble de paliers à roulement (1) selon l'une quelconque des revendications 8 à 10, dans lequel le coefficient logarithmique $c_3$ des troisièmes éléments roulants (10) est inférieur au coefficient logarithmique de référence $c_0$, et le coefficient logarithmique $c_4$ des quatrièmes éléments roulants (12) est supérieur au coefficient logarithmique de référence $c_0$.

12. Ensemble de paliers à roulement (1) selon l'une quelconque des revendications 8 à 11, dans lequel le coefficient logarithmique $c_3$ des troisièmes éléments roulants (10) est compris entre 0,0001 et 0,0003, de préférence entre 0,0002 et 0,0003, et le coefficient logarithmique $c_4$ des quatrièmes éléments roulants (12) est compris entre 0,0004 et 0,0009, de préférence entre 0,0005 et 0,0007.

13. Ensemble de paliers à roulement (1) selon l'une quelconque des revendications 8 à 12, dans lequel les troisièmes et quatrièmes éléments roulants (10, 12) ne se distinguent que par leur profilage de rouleau, et présentent en particulier la même longueur effective $L_{we3,4}$ et le même diamètre maximal $D_{we3,4}$.

14. Eolienne présentant un moyeu de rotor auquel est fixée au moins une pale de rotor, et un générateur qui est réalisé pour transformer de l'énergie cinétique en énergie électrique, un rotor du générateur étant relié de manière verrouillée en rotation au moyeu de rotor par l'intermédiaire d'un arbre de rotor de l'éolienne, **caractérisée en ce que** le moyeu de rotor et/ou l'arbre de rotor est/sont monté(s) au moyen des ensembles de paliers à roulement (1) selon l'une quelconque des revendications précédentes.

**Fig. 1**

**Fig. 2**

EP 3 870 869 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015102867 A1
- DE 102017106962 A1